# DEMANDE DE BREVET EUROPEEN

(11) **EP 2 650 452 A1**
(43) Date de publication de la demande: **16.10.2013**
(21) Numéro de dépôt: 13163246.5
(22) Date de dépôt: 11.04.2013
(51) Int. Cl.: E04C 3/29

(54) **Matériau composite pour planches destinées à de l'aménagement extérieur**

(30) Priorité: 11.04.2012 FR 1253306
(71) Demandeur: Alphacan, 81600 Gaillac (FR)
(72) Inventeur: MESTRES, Philippe, 78290 CROISSY SUR SEINE (FR)
(74) Mandataire: Colombet, Alain André

(57) **Abrégé**

L'invention concerne un matériau composite, se présentant sous forme de planche et destiné notamment à la réalisation de planchers. Le matériau composite comprend une matrice (11) en bois composite et un matériau à changement (MCP) de phase, qui permet d'absorber des calories issues du rayonnement solaire tapant sur la surface extérieure (15) du plancher et de restituer ces calories à la surface du plancher lorsque le soleil décline.

## Description

La présente invention concerne le domaine des aménagements extérieurs. Plus particulièrement, l'invention concerne le domaine des matériaux composites utilisés pour réaliser des planches d'aménagement extérieur, destinées à être assemblées pour former notamment des revêtements de sol de type plancher, ou pour des mobiliers d'extérieur.

Plus précisément, l'invention se rapporte à un matériau composite comprenant une matrice en bois composite. L'invention se rapporte en outre à l'utilisation d'un tel matériau pour la fabrication de planches destinées à être assemblées pour former un aménagement extérieur soumis des rayonnements ultra-violets. L'invention se rapporte enfin à un procédé de fabrication d'une telle planche en matériau composite.

Il existe actuellement deux types de planches destinées notamment à la réalisation de planchers. Un premier type concerne les planches en bois, et un deuxième type concerne les planches en bois composite. Le premier type de planches, en bois naturel, présente les inconvénients d'être coûteux et de ne pas présenter de garanties à long terme en raison de l'utilisation d'un matériau naturel qui, sous l'action combinée du soleil, et notamment du rayonnement Ultra-Violet (UV), et de la pluie, fini par se dégrader. Les planches en bois nécessitent de ce fait un entretien fréquent et coûteux pour prolonger au maximum leur durée de vie. Le deuxième type de planches, en bois-composite, présente également des inconvénients. Le bois composite est un mélange de fibres de bois et d'une résine polymère de type polyéthylène PE, polyéthylène haute densité PEHD, polypropylène PP ou polychlorure de vinyle PVC. Les planches en bois composite ne présentent pas de couleur stable dans le temps. En effet, la présence en quantité importante de bois dans la matrice polymère fait que la planche devient rapidement grise sous l'effet des rayons UV, ce qui conduit rapidement (environ 6 mois) à une dégradation esthétique du produit. Elles sont par ailleurs en général fragiles aux chocs.

Ces planches sont destinées à être utilisées pour réaliser des planchers 30 notamment pour des terrasses exposées aux rayons solaires, telles que des terrasses de jardin, des terrasses de balcon, des terrasses pour tour de piscine, pour plages artificielles, pour pont de bateau, pour des allées de circulation, pour des pontons ou des recouvrements de quais, ou des aménagements collectifs. Ces terrasses sont souvent réservées A la circulation piétonnière et nombreuses sont celles où l'on peut se promener nu pieds. Ces planches peuvent également être utilisées pour réaliser des planchers de complexes sportifs équipés de larges baies vitrées ou de verrières, laissant largement pénétrer les rayons du soleil. Or, lorsque l'on se promène nu pieds sur de telles terrasses ou planchers, il se produit souvent des incidents. Ainsi, lorsque la terrasse se trouve en plein soleil, il est parfois difficile de marcher nu pieds sans ressentir une sensation très désagréable de brûlure. De plus, il n'est pas rare qu'une écharde de bois rentre dans le pied.

De même, les planches en bois ou en bois composite peuvent également servir la réalisation de mobiliers extérieurs tels que des bancs, des chaises ou des tables par exemple. Les bancs publics par exemple, lorsqu'ils sont placés en plein soleil, peuvent également produire une sensation désagréable de brûlure lorsque l'on s'assoie dessus. Cette sensation de brûlure est d'autant plus ressentie lorsque les personnes qui s'y assoient sont en maillot de bain par exemple car le banc se trouve A proximité d'une zone de baignage (piscine, lac, plage artificielle etc...).

L'invention a donc pour but de remédier A au moins un des inconvénients de l'art antérieur. L'invention vise notamment A améliorer le confort des matériaux composites utilisés pour la réalisation de tels aménagements extérieurs, par assemblage de planches en matériau composite.

A cet effet, l'invention a pour objet un matériau composite, pour planche destinée à un aménagement extérieur, comprenant une matrice en bois composite, ledit matériau composite étant **caractérisé en ce qu'il** comprend en outre un matériau changement de phase et en ce qu'il se présente sous la forme d'une planche et comprend au moins une cavité qui s'étend sur tout ou partie de la longueur de ladite planche, de préférence sur toute la longueur de la planche, ladite cavité étant remplie dudit matériau A changement de phase.

Ainsi, le matériau A changement de phase présent dans le matériau composite, permet de récupérer des calories émises par les rayonnements solaires pendant la 30 journée et ainsi d'abaisser de quelques degrés (1 à 3°C environ) la température de surface d'une planche réalisée dans un tel matériau composite, de sorte qu'il permet d'éviter la sensation désagréable de brûlure lorsque l'on marche nu pieds dessus. Par ailleurs, lorsque la nuit tombe, le matériau à changement de phase du plancher permet de restituer quelques calories à la surface de la planche afin de sentir une température agréable sous la voute plantaire.

Selon d'autres caractéristiques optionnelles du matériau composite :
- le matériau à changement de phase est un matériau minéral,
- le matériau à changement de phase se présente sous forme de poudre de sels hydratés choisis parmi : du sulfate de sodium décahydraté, de thiosulfate de sodium ou de l'acétate de sodium,
- le matériau à changement de phase est un matériau organique,
- le matériau à changement de phase se présente sous la forme de microbilles de cire de paraffine encapsulées dans un polymère,
- le polymère d'encapsulation des microbilles de cire de paraffine est à base d'un polymère acrylique ou d'un copolymère d'éthylène,
- ladite cavité est pratiquée, dans la matrice de bois composite, à une distance 15 de la surface extérieure inférieure à 5 mm, et de préférence à une distance comprise entre 3.5mm et 4 mm,
- la matrice en bois-composite est à base de fibres de bois et de résine plastique choisie parmi l'un des polymères suivants : polypropylène, polyéthylène ou polychlorure de vinyle,
- la résine plastique du bois composite est à base de polychlorure de vinyle et le polymère d'encapsulation des microbilles de cire de paraffine est un polymère acrylique,
- la résine plastique du bois composite est A base de polyéthylène et le polymère d'encapsulation des microbilles de cire de paraffine est un copolymère d'éthylène,
- le matériau comprend en outre une matière de surface à base d'un composé vinylique plastifié insensible aux rayons Ultra-Violets,
- la matière de surface comprend, à des endroits prédéterminés, des pigments permettant de révéler une ou plusieurs bandes fluorescentes et/ou phosphorescentes,
- lesdits pigments sont choisis parmi des sulfures de zinc, comprenant des 5 traces de cuivre ou de cobalt, ou des aluminates alcalino- terreux,
- la planche se présente sous la forme d'une planche alvéolaire ou pleine.

L'invention se rapporte en outre à l'utilisation dudit matériau composite tel que décrit précédemment pour la fabrication de planches destinées à être assemblées pour former un aménagement extérieur soumis à des rayonnement Ultra-Violets.

Les applications d'aménagement extérieur envisagées sont nombreuses. A titre d'exemple, on peut citer les planchers pour terrasses, pour tours de piscine, pour pontons, pour ponts de bateau, pour recouvrements de quais, pour plages artificielles, pour allées de circulation piétonnière, pour aménagements collectifs etc... On peut également citer des applications pour mobilier d'extérieur, tel que des bancs, des chaises ou des tables par exemple.

L'invention se rapporte enfin à un procédé de fabrication d'une planche en matériau composite, ledit procédé consistant à extruder une matrice en bois composite et étant **caractérisé en ce qu'**au moment de l'extrusion, au moins une cavité est pratiquée sur toute la longueur de ladite planche, ladite cavité étant prévue pour accueillir un matériau à changement de phase.

Selon d'autres caractéristiques optionnelles du procédé :
- le matériau à changement de phase est introduit dans ladite cavité par co- extrusion, simultanément à l'extrusion de ladite planche, à une température comprise entre 100°C et 200 °C,
- le matériau à changement de phase est introduit dans la cavité au cours d'une deuxième étape, dite de remplissage, par coulage ou injection à température ambiante, une matière de surface, à base d'un compose vinylique plastifié, est co-extrudée avec la planche,
- des bandes fluorescentes et/ou phosphorescentes sont post-extrudées par application de pigments sur des zones prédéterminées et ramollies par chauffage de ladite matière de surface.

D'autres avantages et caractéristiques de l'invention apparaîtront A la lecture des exemples suivants donnes ä titre d'exemple illustratif et non limitatif, en référence aux figures annexées qui représentent :
La figure 1, un schéma d'une planche en matériau composite selon un premier mode de réalisation,
La Figure 2, un schéma d'un assemblage de planches selon un deuxième mode de réalisation,
La Figure 3, un schéma d'un assemblage de planches selon un autre mode de réalisation.

On désigne par le terme « aménagement extérieur D, tout assemblage de planches soumis aux rayonnements solaires, tels que par exemple des planchers, terrasses, clôtures, pergolas, façades d'édifices ou des mobiliers tels que des bancs, des chaises, des tables.

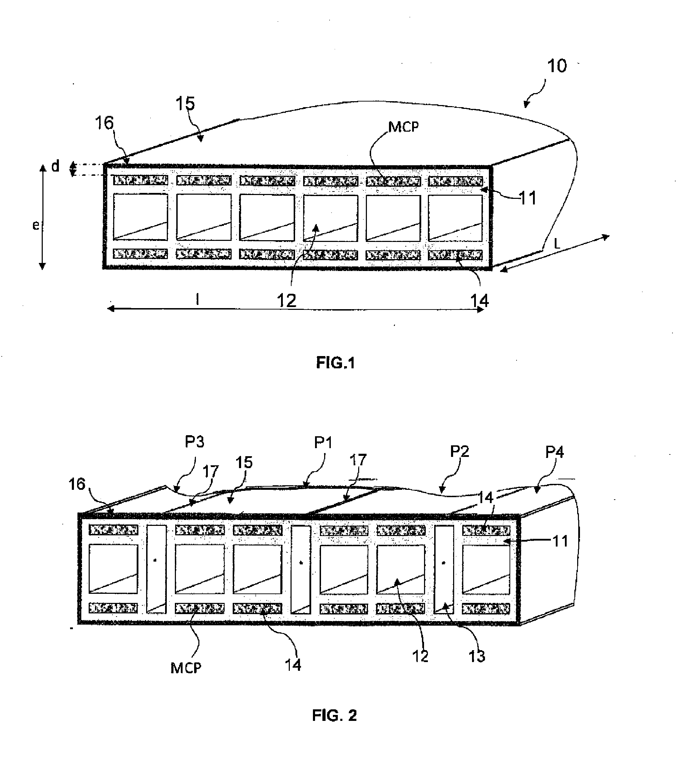

La figure 1 représente de manière schématique une planche vue en coupe, présentant un axe longitudinal L, une largeur I et une épaisseur e. Cette planche 10 est réalisée par extrusion. Elle comprend une matrice en bois composite 11. La résine polymère du bois composite est une résine de type polyéthylène PE, polyéthylène haute densité PEND, polypropylène PP ou polychlorure de vinyle PVC. La planche 10 schématisée est une planche alvéolaire, c'est-à-dire qu'elle comprend des alvéoles 12 ménagées sur toute la longueur de la planche et débouchant A chaque extrémité. Ces alvéoles 12 permettent non seulement d'alléger le poids de la planche mais aussi de réduire son coût de fabrication et n'influent pas sur la résistance de la matrice 11. Les planches selon l'invention sont destinées à être assemblées les unes aux autres pour former des planchers notamment. Le fait que ces planches soient alvéolaires ou pleines n'influe pas sur l'invention.

D'autres cavités débouchantes 14 sont en outre ménagées dans la longueur de la matrice 11 en bois composite. Ces cavités 14 sont plus petites en taille que les alvéoles 12. Elles sont pratiquées dans la matrice en bois composite 11 dans une zone se situant entre la surface extérieure 15 de la planche et une alvéole 12. Ces cavités sont de préférence de forme sensiblement rectangulaire et sont destinées A accueillir un matériau à changement de phase MCP. Ainsi, le matériau à changement de phase permet de donner une inertie thermique A la planche rendant le contact avec le pied plus agréable.

En effet, en plein soleil, et en fonction de la température de surface de la planche, le matériau A changement de phase, stocké dans les cavités 14 de la planche, absorbe des calories permettant ainsi de réduire la température en surface de la planche de quelques degrés lors des périodes les plus chaudes de la journée.

Ainsi, la sensation de brûlure des pieds n'existe plus et le contact est rendu plus agréable. La nuit, au contraire, dés que la température baisse, le phénomène inverse permet de restituer quelques calories en surface et donc de donner quelques degrés en rendant le contact avec le pied nu plus agréable avec une sensation de douce chaleur.

Pour que le matériau à changement de phase produise tous ses effets, il faut cependant qu'il soit suffisamment proche de la surface extérieure 15 de la planche. S'il est disposé dans des cavités trop éloignées ou profondes, il deviendra en effet complètement inopérant. Cependant, si les cavités destinées à accueillir le matériau changement de phase sont trop proches de la surface extérieure, la résistance de surface de la planche diminue et peut dépasser un seuil critique. Par conséquent, un compromis doit être fait pour placer les cavités 14 dans la matrice 11 de telle sorte que le matériau à changement de phase puisse agir correctement sans pour autant fragiliser la résistance de surface de la planche. En général on préfère placer les cavités 14 A une distance d de la surface extérieure 15, de préférence inférieure à 5 mm, et de manière encore préférée à une distance comprise entre 3.5 et 4 mm de la surface extérieure 15.

Les cavités 14 sont réalisées en même temps que les alvéoles 12, au moment de la fabrication par extrusion de la planche 10.

Le matériau ä changement de phase utilisé pour être placé dans ces cavités 14 est avantageusement choisi parmi des matériaux minéraux ou organiques. Lorsque le matériau A changement de phase est un matériau minéral, il est choisi parmi des sels hydratés. Plus particulièrement, il s'agit de poudre de sulfate de sodium décahydrate, de thiosulfate de sodium ou d'acétate de sodium.

Lorsque le matériau à changement de phase est un matériau organique, il s'agit plus particulièrement de cires de paraffine. De manière préférée, ces cires de paraffine se présentent sous forme de microbilles encapsulées dans un polymère de type copolymère d'éthylène ou un polymère acrylique par exemple. Le matériau changement de phase est introduit sous la forme de ces microbilles, soit pendant le processus de co-extrusion de la planche, soit après l'extrusion par remplissage température ambiante.

Le procédé par co-extrusion consiste plus particulièrement b mélanger le matériau à changement de phase b une formule PVC, puis à l'introduire dans la cavité par co-extrusion simultanément à l'extrusion de la planche. Lorsque des microbilles de cire de paraffine sont utilisées comme matériau à changement de phase, il est cependant important de maitriser la température au moment de la co-extrusion des microbilles afin de ne pas dégrader le polymère d'encapsulation et de conserver l'encapsulation de la cire de paraffine. En effet, la cire de paraffine a une température de fusion inférieure à 100°C. Par conséquent si l'enveloppe de polymère qui encapsule la cire de paraffine est abîmée, de la cire de paraffine en fusion risque de s'écouler de la planche. Il faut donc conserver l'enveloppe de polymère intacte et ne pas la fragiliser ou la détruire par de trop fortes températures. Ainsi, la température lors de la co-extrusion ne doit pas dépasser 200°C.

Le procédé de remplissage, quant à lui, consiste à mélanger le matériau b changement de phase avec un liant, tel que du plâtre par exemple ou tout autre type de liant connu, et permettant une coulée ou une injection du matériau dans les cavités 14, à température ambiante.

Quelle que soit la méthode, les microbilles, qui présentent en général un diamètre compris entre 0,1 et 0,3 mm, s'agglomèrent et se collent entre-elles et adhérent à la matrice en bois composite.

De manière avantageuse, il est en outre possible d'améliorer encore le confort de la planche notamment au toucher lorsque l'on marche pied nu dessus. Pour cela, une matière au toucher plus agréable et plus doux peut être appliquée par co-extrusion sur la surface extérieure 15 de la planche. Une telle matière est référencée sur la figure 1. Cette matière douce au toucher est par exemple choisie parmi des composés vinyliques plastifiés. Un tel composé permet ainsi d'éviter la sensation de rugosité de surface des produits traditionnels et les phénomènes d'échardes des produits bois classiques pouvant se produire sur de vieux planchers notamment. Ainsi, la matière de surface peut par exemple être un compose fabrique par la société Arkema sous la marque déposée Nakanprene. Une telle matière, encore dénommée « peau » dans la suite de la description, présente en outre une très grande stabilité aux UV, si bien qu'elle protège efficacement la planche contre le vieillissement dû aux rayonnements solaires. La présence de bois dans un bois composite rend en général le matériau composite très hydrophile, mais grâce b cette matière de surface 16 qui fait avantageusement barrière à l'humidité, le matériau composite est protégé de l'humidité. Enfin, la matière de surface 16 présente aussi l'avantage d'être antidérapante, caractéristique particulièrement utile dans le cas d'une utilisation b proximité d'eau comme par exemple les bords d'une piscine, des plages artificielles, des quais maritimes ou fluviaux, des pontons ou le pont d'un bateau etc...

La figure 2 illustre une vue schématique en coupe d'un assemblage de planches P1, P2, P3, et P4 selon un autre mode de réalisation. Les mêmes références que sur la figure 1 sont utilisées pour designer les mêmes objets. Ainsi, des cavités 14 sont disposées à quelques mm en dessous de la surface extérieure 15 et contiennent un matériau organique b changement de phase MCP. Une peau 16 de type Nakanprene ou équivalent est co-extrudée avec les planches et recouvre toutes leurs surfaces externes.

Les planches P1 à P4 comprennent en outre des alvéoles 13 le long de leurs bordures longitudinales. Ces alvéoles 13 sont destinées à recevoir des moyens de fixation pour fixer les planches les unes aux autres. Ces moyens de fixation peuvent par exemple être des systèmes de vis-écrous, ou des systèmes de clipsage etc...Sur la figure 2, quatre planches P1, P2, P3, et P4 sont assemblées les unes aux autres.

Sur la figure 2, sont également dessinées, au droit des alvéoles 13, des bandes le long des bordures longitudinales de chaque planche P1 à P4. Ces bandes, référencées 17, peuvent être phosphorescentes et/ou fluorescentes afin de pouvoir visualiser les planches une fois la nuit tombée. Ces bandes ont un intérêt particulier dans des allées de jardin ou en tour de piscine afin d'éviter les chutes ou entorses lorsque le pied porte A faux sur les bordures des planchers.

Ces bandes 17 sont réalisées dans la matière de surface 16 en compose vinylique plastifiée (Nakanprene par exemple) appliquée par co-extrusion sur le pourtour de la planche.

Les bandes phosphorescentes ou fluorescentes s'obtiennent par l'intégration de pigments adaptés, dans des zones prédéfinies de cette « peau » de type Nakanprene.

Les bandes phosphorescentes permettent un repérage, sur les planchers extérieurs, plusieurs heures après le coucher du soleil. Les bandes fluorescentes, quant - à elles, permettent d'améliorer la visualisation des planchers ainsi réalises, lorsqu'ils sont éclairés par des lampes apportant une source UV nécessaire A la fluorescence desdites bandes, telles qu'une lumière noire par exemple.

Ces bandes 17 phosphorescentes et/ou luminescentes sont réalisées le long des bordures longitudinales des planches. Un pigment de la couleur choisie est appliqué par post-extrusion. Pour cela, la peau 16 est chauffée sur une bande correspondante et le pigment désiré, de la couleur choisie, est déposé par post- extrusion sur les zones chaudes de la peau. Le pigment adhère alors A la zone chaude et vient se mélanger dans le plastique ramolli.

A titre d'exemple, le pigment est choisi parmi des sulfures de zinc avec des 20 traces de cuivre ou de cobalt ou des aluminates alcaline-terreux.

Sur la figure 2 qui vient d'être décrite, les planches peuvent être déposées d'un côté comme de l'autre. Dans ce cas, on peut par exemple avoir deux designs différents sur chaque surface extérieure 15, ce qui permet de proposer avec un seul produit deux références différentes. Les cavités 14 contenant le matériau à changement de phase sont donc pratiquées A proximité des deux surfaces extérieures 15 de la planche, c'est-à-dire à une distance d inférieure A 5 mm, et de préférence A une distance d comprise entre 3.5 et 4 mm de chaque surface extérieure 15.

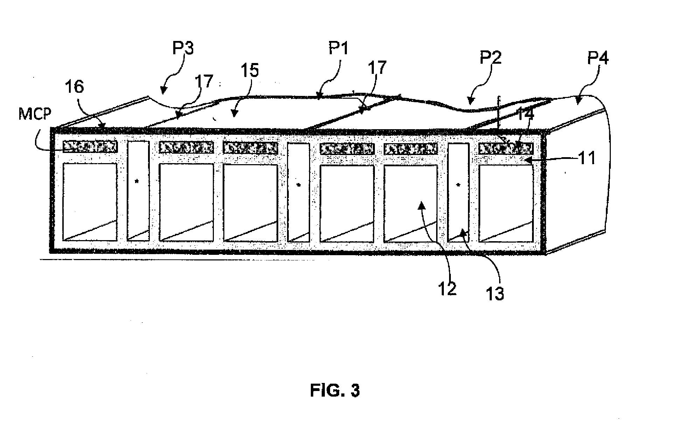

Selon un autre mode de réalisation, tel qu'illustré sur la figure 3, la planche ne peut être posée que d'une seule manière. En effet, les cavités 14 contenant le matériau à changement de phase MCP ne sont pratiquées qu'a proximité d'une seule surface extérieure 15. Dans ce cas, un seul design est proposé au client. Ce mode de réalisation permet d'obtenir une solution moins coûteuse puisqu'elle évite de positionner de la matière à changement de phase sur la partie qui ne sera pas exposée aux rayons solaires. De même, dans un tel mode de réalisation, la « peau » externe 16 peut ne pas être appliquée tout autour des planches mais juste sur la surface extérieure exposée au soleil et les bordures longitudinales, ce qui permet, là encore, d'économiser des coûts de matières.

### Exemple 1 : Utilisation du matériau composite pour la réalisation d'un 10 plancher de terrasse

Des planches alvéolaires, destinées à la réalisation de plancher pour terrasse sont fabriquées par extrusion. Chaque planche est réalisée partir de fibre de bois et de polychlorure de vinyle PVC dans des proportions en fibres de bois comprises entre 30 et 60%, de préférence 50%. Dans cet exemple, le PVC est préféré au PE, PEHD ou PP car il améliore la rigidité de la lame alvéolaire, il présente une meilleure résistance aux rayures et à l'abrasion et il est plus dense que les autres polymères.

Les alvéoles de la planche, mais également les cavités destinées à être remplies d'un matériau à changement de phase, sont réalisées simultanément lors de l'extrusion de la planche.

Une « peau » en composé vinylique plastifié, tel que le composé commercialisé par la société Arkema sous la marque Nakanprene, est co-extrudée sur les surfaces extérieures de la planche.

Un matériau organique à changement de phase est également co-extrudé dans les cavités de la planche prévues à cet effet. De préférence on utilise des microbilles 25 de cire de paraffine encapsulées dans un polymère acrylique car le polymère acrylique, une fois chauffé à une température comprise entre 100 et 200°C, présente une bonne adhérence avec la matrice PVC de la planche. Ainsi, on utilise de préférence des microbilles commercialisées par la société BASF sous la Marque Micronal. Ces microbilles sont de plus mélangées à une formule PVC puis co-extrudées avec la planche en formation. Lors de cette Po-extrusion, il faut cependant maitriser la température pour éviter que le polymère acrylique d'encapsulation des microbilles ne se dégrade et se perce. La température de fusion des cires de paraffine est en effet inférieure à 100°C. Par conséquent, si le polymère d'encapsulation s'abime, la cire de paraffine en fusion va s'écouler hors de la planche. La température lors de la co-extrusion ne doit donc pas dépasser 200°C.

Les microbilles permettent ainsi de réguler la température de la surface extérieure d'un plancher à des niveaux confortables se situant entre 22 et 26°C.

Des bandes fluorescentes et/ou phosphorescentes peuvent en outre être rajoutées le long des bordures longitudinales des planches, par post-extrusion. Dans ce cas, la zone prédéterminée pour la réalisation de la bande est chauffée de manière à ramollir la peau de type Nakanprene, puis les pigments fluorescents et/ou phosphorescents sont appliqués sur les zones chauffées, de sorte que les pigments se collent et se lient è la peau.

Les planches ainsi obtenues sont ensuite assemblées les unes aux autres par leurs bordures pour créer un plancher.

### Exemple 2: Utilisation du matériau composite pour la réalisation d'un plancher de terrasse

Les planches sont réalisées de la même manière que dans l'exemple 1 à une différence près : les microbilles de cire de paraffine encapsulées dans un polymère acrylique ne sont pas co-extrudées dans les cavités de la planche, mais elles sont introduites dans les cavités après fabrication de la planche. Pour cela, les microbilles sont mélangées è un liant, tel que du piètre par exemple, puis le mélange obtenu est introduit dans les cavités de la planche par simple coulée ou par injection. Dans ce cas, les microbilles sont introduites dans les cavités à température ambiante. Ainsi, les microbilles forment un agglomérat dans les cavités et adhérent entre-elles mais aussi aux parois de la matrice en PVC-bois.

### Exemple 3: Utilisation du matériau composite pour la réalisation d'un mobilier urbain

Une planche pleine en bois composite composé de fibres de bois et de polyéthylène PE, comprenant des cavités destinées à y loger un matériau à changement de phase est formé par extrusion. Le matériau à changement de phase introduit dans les cavités est par exemple constitué de microbilles de cire de paraffine encapsulées dans un copolymère d'éthylène. L'introduction du matériau est réalisée par co-extrusion. Lors du remplissage des cavités par le matériau à changement de phase, la température est maitrisée de sorte qu'elle ne dépasse pas le seuil haut de 200 °C. De telles planches peuvent ensuite être assemblées pour la réalisation d'un mobilier extérieur, tel qu'un banc par exemple.

Selon une variante, lorsque les microbilles sont introduites dans les cavités dans une étape ultérieure de remplissage à température ambiante, le polymère d'encapsulation des microbilles n'a pas forcément besoin d'être compatible avec le polyéthylène de composition de la planche en bois composite.

## Revendications

1. Matériau composite, pour planche destinée à un aménagement extérieur, comprenant une matrice (11) en bois composite, ledit matériau composite étant **caractérisé en ce qu'il** comprend en outre un matériau A changement de phase et **en ce qu'**il se présente sous la forme d'une planche et comprend au moins une cavité (14) qui s'étend sur tout ou partie de la longueur de ladite planche, de préférence sur toute la longueur de la planche, ladite cavité (14) étant remplie dudit matériau A changement de phase.

2. Matériau composite selon la revendication 1, **caractérisé en ce que** le matériau à changement de phase est un matériau minéral.

3. Matériau selon la revendication 2, **caractérisé en ce que** le matériau à changement de phase se présente sous forme de poudre de sels hydratés choisis parmi : du sulfate de sodium décahydraté, de thiosulfate de sodium ou de l'acétate de sodium.

4. Matériau composite selon la revendication 1, **caractérisé en ce que** le matériau à changement de phase est un matériau organique.

5. Matériau composite selon la revendication 4, **caractérisé en ce que** le matériau à changement de phase se présente sous la forme de microbilles de cire de paraffine encapsulées dans un polymère.

6. Matériau composite selon la revendication 5, **caractérisé en ce que** le polymère d'encapsulation des microbilles de cire de paraffine est b base d'un polymère acrylique ou d'un copolymère d'éthylène.

7. Matériau composite selon l'une quelconque des revendications précédentes, **caractérise en ce que** ladite cavité (14) est pratiquée, dans la matrice (11) de bois composite, à une distance (d) de la surface extérieure (15) inférieure A 5 mm, et de préférence A une distance (d) comprise entre 3.5 mm et 4 mm.

8. Matériau composite selon l'une des revendications précédentes, **caractérisé en ce que** la matrice (11) en bois-composite est à base de fibres de bois et de résine plastique choisie parmi l'un des polymères suivants : polypropylène, polyéthylène ou polychlorure de vinyle.

9. Matériau composite selon l'une des revendications 4 à 8, **caractérisé en ce que** la résine plastique du bois composite est à base de polychlorure de vinyle et le polymère d'encapsulation des microbilles de cire de paraffine est un polymère acrylique.

10. Matériau composite selon l'une des revendications 4 à 8, **caractérisé en ce que** la résine plastique du bois composite est à base de polyéthylène et le polymère d'encapsulation des microbilles de cire de paraffine est un copolymère d'éthylène.

11. Matériau composite selon l'une des revendications précédentes, **caractérisé en ce qu'il** comprend en outre une matière de surface (16) à base d'un composé vinylique plastifié insensible aux rayons Ultra-Violets.

12. Matériau composite selon la revendication 11, **caractérisé en ce que** la matière de surface (16) comprend, à des endroits prédéterminés, des pigments permettant de révéler une ou plusieurs bandes (17) fluorescentes et/ou phosphorescentes.

13. Matériau composite selon la revendication 12, **caractérisé en ce que** les 15 pigments sont choisis parmi des sulfures de zinc, comprenant des traces de cuivre ou de cobalt, ou des aluminates alcalino-terreux.

14. Utilisation d'un matériau composite selon l'une des revendications 1 à 13, pour la fabrication de planches destinées à être assemblées pour former un aménagement extérieur soumis à des rayonnements ultra-violets.

15. Procédé de fabrication d'une planche en matériau composite, ledit procédé consistant à extruder une matrice (11) en bois composite et étant **caractérisé en ce qu'**au moment de l'extrusion, au moins une cavité (14) est pratiquée sur toute la longueur de ladite planche, ladite cavité (14) étant prévue pour accueillir un matériau 6 changement de phase.

16. Procédé selon la revendication 15, **caractérisé en ce que** ledit matériau à changement de phase est introduit dans ladite cavité (14) par co-extrusion simultanément à l'extrusion de ladite planche, à une température comprise entre 100°C et 200°C.

17. Procédé selon la revendication 15, **caractérisé en ce que** ledit matériau à changement de phase est introduit dans ladite cavité (14) au cours d'une deuxième étape, dite de remplissage, par coulage ou injection à température ambiante.

18. Procédé selon l'une des revendications 15 à 17, **caractérisé en ce qu'**une matière de surface (16), à base d'un composé vinylique plastifié, est co-extrudée avec ladite planche.

19. Procédé selon la revendication 18, **caractérisé en ce que** des bandes (17) fluorescentes et/ou phosphorescentes sont post-extrudées par application de pigments sur des zones prédéterminées et ramollies par chauffage de ladite matière de surface (16).
